# EUROPEAN PATENT APPLICATION

(11) **EP 3 163 505 A1**
(43) Date of publication of application: **03.05.2017**
(21) Application number: 16195236.1
(22) Date of filing: 24.10.2016
(51) Int. Cl.: G06K 9/00

(54) **METHOD AND APPARATUS FOR AREA IDENTIFICATION**

(30) Priority: 30.10.2015 CN 201510727934
(71) Applicant: Xiaomi Inc., Beijing 100085 (CN)
(72) Inventor: LONG, Fei, Haidian District, Beijing 100085 (CN); ZHANG, Tao, Haidian District, Beijing 100085 (CN); CHEN, Zhijun, Haidian District, Beijing 100085 (CN)
(74) Representative: Reeve, Nicholas Edward

(57) **Abstract**

Method and apparatus for area identification are provided in the present disclosure; which pertain to the field of image processing. The method for area identification comprises: identifying (102) a predefined edge in a credential image, the predefined edge is an edge located on a predefined directions of the credential; identifying (104) at least one information area in the credential image based on the predefined edge; and cutting (106) the information area to obtain at least one character area. It solves the problems in related art that it is difficult to identify some information areas in the credential image obtained directly by photographing and that the locations of some information areas are inaccurate, and achieves the effect of locating an information areas accurately and identifying character areas in the information areas accurately by determining information areas in an credential image based on the predefined edge and cutting the information areas.

## Description

### FIELD

The present disclosure generally relates to image processing, and more particularly to a method and apparatus for area identification.

### BACKGROUND

Automatic identification of an identity card is a technology for identifying character information on the identity card by image processing.

Related technology provides a method for automatic identification of an identity card, wherein the method comprises scanning the identity card by an identity card scanning device in a fixed relative location to obtain the scanned image of the identity card; identifying the characters of predefined *n* areas in the scanned image to obtain information about at least one of name, gender, nationality, date of birth, address and civil identity number. However, it is still difficult to identify the image of the identity card obtained directly by photographing.

### SUMMARY OF THE INVENTION

In view of the problems in related arts, a method and apparatus for area identification are provided in the disclosure.

According to a first aspect of the present disclosure, a method for area identification is provided, the method comprising: identifying a predefined edge in a credential image, the predefined edge is an edge located on a predefined directions of the credential; identifying at least one information area in the credential image based on the predefined edge; and cutting the information area to obtain at least one character area.

Optionally, identifying a predefined edge in a credential image comprises: performing Sobel horizontal filtering and binarization on the credential image to obtain a processed credential image; and conducting a line detection for a predefined area in the processed credential image to obtain a target line, wherein the target line is identified as the predefined edge of the credential image.

Optionally, the method further comprises: zooming out the credential image with a predefined zoom-out scale in advance.

Optionally, the method further comprises: conducting an area-connection process to predefined areas in the processed credential image.

Optionally, identifying at least one information area in the credential image based on the predefined edge comprises: determining the at least one information area based on the predefined edge and a relative location relationship, wherein the relative location relationship refers to relative location relationship between the predefined edge and the information area.

Optionally, the credential is a second generation ID card, the predefined edge is the lower edge of the second generation ID card, and the information area is a citizenship number area within the second generation ID card, and determining the at least one information area based on the predefined edge and a relative location relationship comprises: determining an area that is located a predefined height above the lower edge as the citizenship number area.

Optionally, the method further comprises: conducting a tilt angle correction to the credential image according to slope of the predefined edge.

Optionally, conducting the tilt angle correction comprises: determining an angle between the predefined edge and the horizontal direction according to slope of the predefined edge; and rotating the credential image by the angle, such that the predefined edge of the rotated credential image is parallel to the horizontal direction.

Optionally, cutting the information area to obtain at least one character area comprises: binarizing the information area to obtain a binarized information area; calculating a first histogram of the binarized information area on horizontal direction, wherein the first histogram includes a vertical coordinate of each row of pixel points and a accumulative value of a number of foreground color pixel points in each row of pixel points; identifying *n* rows of character areas in accordance with consecutive row sets in the first histogram, each of which is composed of rows in which the accumulative values of the number of the foreground color pixel points are larger than a first threshold, wherein *n* is a positive integer; calculating a second histogram on a vertical direction for the *i^{th}* row of character areas, wherein the second histogram includes a horizontal coordinate of each column of pixel points and a accumulative value of a number of foreground color pixel points in each column of pixel points, wherein *n* ≥ *i* ≥ 1 and *i* is a positive integer; identifying *nᵢ* character areas in accordance with consecutive column sets in the second histogram, each of which is composed of columns in which the accumulative values of the number of the foreground color pixel points are larger than a second threshold.

According to a second aspect of the present disclosure, an apparatus for area identification is provided, the apparatus comprising: an identification module configured to identify a predefined edge in a credential image, wherein the predefined edge is an edge located on a predefined direction of the credential; a determination module configured to determine at least one information area in the credential image based on the predefined edge; and a cutting module configured to cut the information area to obtain at least one character area.

Optionally, the identification module comprises: a filtering sub-module configured to perform Sobel horizontal filtering and binarization on the credential image to obtain a processed credential image; and a detection sub-module configured to conduct a line detection for a predefined area in the processed credential image to obtain a target line, wherein the target line is identified as the predefined edge of the credential image.

Optionally, the apparatus further comprises: a zooming-out module configured to zoom out the credential image with a predefined zoom-out scale in advance.

Optionally, the apparatus further comprises: a connection module configured to conduct an area-connection process to predefined areas in the processed credential image.

Optionally, the determination module is configured to determine at least one information area based on the predefined edge and a relative location relationship, wherein the relative location relationship refers to a relative location relationship between the predefined edge and the information area.

Optionally, the credential is a second generation ID card, the predefined edge is the lower edge of the second generation ID card, and the information area is a citizenship number area within the second generation ID card; the determination module is further configured to determine an area that is located a predefined height above the lower edge as the citizenship number area.

Optionally, the apparatus further comprises: a correction module configured to conduct a tilt angle correction to the credential image according to slope of the predefined edge.

Optionally, the correction module comprises: an angle determination module configured to determine an angle between the predefined edge and the horizontal direction is determined according to slope of the predefined edge; and a rotation sub-module configured to rotate the credential image by the angle, such that the predefined edge of the rotated credential image is parallel to the horizontal direction.

Optionally, the cutting module comprises: a binarization sub-module configured to binarize the information area to obtain a binarized information area; a first calculation sub-module configured to calculate a first histogram of the binarized information area on horizontal direction, wherein the first histogram includes a vertical coordinate of each row of pixel points and a accumulative value of a number of foreground color pixel points in each row of pixel points; a row identification sub-module configured to identify *n* rows of character areas in accordance with consecutive row sets in the first histogram, each of which is composed of rows in which the accumulative values of the number of the foreground color pixel points are larger than a first threshold, wherein *n* is a positive integer; a second calculation sub-module configured to: for the *i^{th}* row of character areas, calculate a second histogram on a vertical direction, wherein the second histogram includes a horizontal coordinate of each column of pixel points and a accumulative value of a number of foreground color pixel points in each column of pixel points, *wherein n* ≥ *i* ≥ 1 and *i* is a positive integer; a character identification sub-module configured to identify *nᵢ* character areas in accordance with consecutive column sets in the second histogram, each of which is composed of columns in which the accumulative values of the number of the foreground color pixel points are larger than a second threshold.

According to a third aspect of the present disclosure, an apparatus for area identification is provided, the apparatus comprises: a processor and a memory for storing processor-executable instructions; wherein the processor is configured for: identifying a predefined edge is identified in a credential image, wherein the predefined edge is an edge located on a predefined directions of the credential; identifying at least one information area in the credential image based on the predefined edge; and cutting the information area to obtain at least one character area.

According to a fourth aspect of the present disclose, a non-transitory computer-readable storage medium is provided, having instructions stored thereon which when executed by a processor cause the processor to perform any of the above methods.

Embodiments of the disclosure may provide at least some of the following beneficial effects: by identifying a predefined edge in a credential image, wherein the predefined edge is an edge located on a predefined directions of the credential; identifying at least one information area in the credential image based on the predefined edge; and cutting the information area to obtain at least one character area; it solves the problems in the related art that it is difficult to identify some information areas in the credential image obtained directly by photographing and that the locations of some information areas are inaccurate, and achieves the effect of locating information areas accurately and identifying character areas in the information areas accurately by determining information areas in a credential image based on the predefined edge and cutting the information areas.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for area identification according to an exemplary embodiment.
Fig. 2A is a flow diagram illustrating a method for area identification according to another exemplary embodiment.
Fig. 2B is a schematic diagram illustrating the binarization of the credential image according to an exemplary embodiment.
Fig. 2C is a schematic diagram illustrating the line detection in the credential image according to an exemplary embodiment.
Fig. 3A is a flow diagram illustrating a method for area identification according to another exemplary embodiment.
Fig. 3B is a schematic diagram illustrating the credential image after area-connection process according to an exemplary embodiment.
Fig. 4 is a flow diagram illustrating a method for area identification according to another exemplary embodiment.
Fig. 5A is a flow diagram illustrating a method for area identification according to another exemplary embodiment.
Fig. 5B is a schematic diagram illustrating the calculation of a first histogram on a horizontal direction according to an exemplary embodiment.
Fig. 5C is a schematic diagram illustrating a set of consecutive rows according to an exemplary embodiment.
Fig. 5D is a schematic diagram illustrating the calculation of a second histogram on a vertical direction according to an exemplary embodiment.
Fig. 5E is a schematic diagram illustrating a set of consecutive rows according to an exemplary embodiment.
Fig. 6 is a block diagram illustrating a device for area identification according to an exemplary embodiment.
Fig. 7 is a block diagram illustrating a device for area identification according to another exemplary embodiment.
Fig. 8 is a block diagram illustrating a device for area identification according to another exemplary embodiment.
Fig. 9 is a block diagram illustrating a device for area identification according to another exemplary embodiment.
Fig. 10 is a block diagram illustrating a device for area identification according to another exemplary embodiment.
Fig. 11 is a block diagram illustrating a device for area identification according to an exemplary embodiment.

### DETAILED DESCRIPTION

Reference will now be made in detail to exemplary embodiments, examples of which arc illustrated in the accompanying drawings. The following description refers to the accompanying drawings in which same numbers in different drawings represent the same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

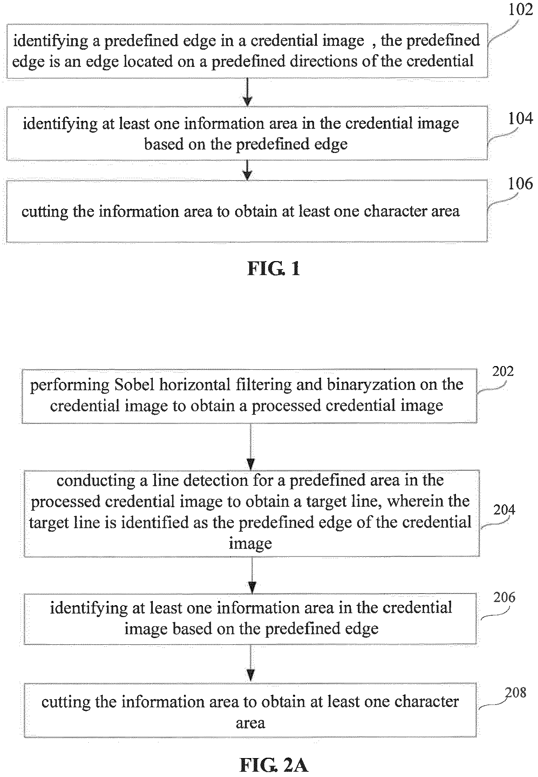

Fig. 1 is a flow diagram illustrating a method for area identification according to an exemplary embodiment. As illustrated in Fig. 1, the method for area identification may include the following steps.

In step 102, a predefined edge in a credential image is identified, the predefined edge being an edge located along a predefined direction of the credential.

The credential image is the image obtained directly by photographing the credential, such as an image of an identity card, an image of a social security card and the like.

The predefined edge may be any one of upper edge, lower edge, left edge and right edge of the credential. In embodiments of the present disclosure, the right edge is taken for example and the situations in which the predefined edge is upper edge, left edge or right edge are not described in detail.

In step 104, at least one information area in the credential image is identified based on the predefined edge.

The location of the predefined edge in the credential image is relatively fixed. Further, the location of the predefined edge is usually easier to locate than the location of an information area; therefore, the respective information areas on the credential can be determined in the credential image based on the predefined edge.

The information area refers to the area carrying character information in the credential image, such as at least one of a name information area, date of birth information area, gender information area, address information area, civil identity number information area, serial number information area, issuance office of the credential information area, valid date information area and the like.

In step 106, the information area is cut to obtain at least one character area.

An information area includes a plurality of characters. For one information area, at least one character area may be obtained by area cutting. A character area is a area including a single character. A character may be Chinese characters, English letters, numbers and/or characters in other languages.

In summary, in the method for area identification according to the embodiment of the disclosure, by identifying a predefined edge in a credential image, at least one information area in the credential image is identified based on the predefined edge; the information area is cut to obtain at least one character area. It solves the problems in the related art that it is difficult to identify some information areas in the credential image obtained directly by photographing and that the locations of some information areas are inaccurate, and achieves the effect of locating an information areas accurately and identifying character areas in the information areas accurately by determining information areas in an credential image based on the predefined edge and cutting the information areas.

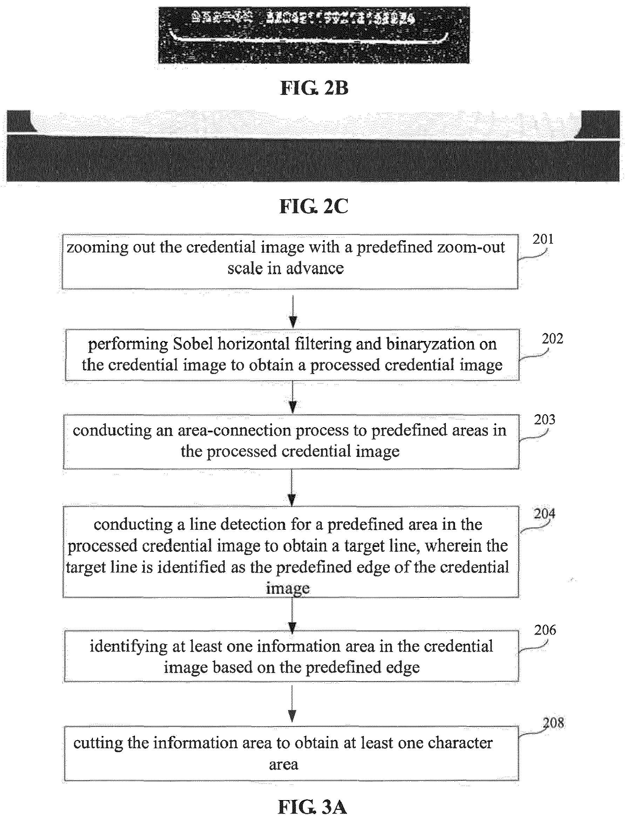

Fig. 2A is a flow diagram illustrating a method for area identification according to another exemplary embodiment. As illustrated in Fig. 2, the method for area identification may include the following steps.

In step 202, Sobel horizontal filtering and binarization are performed on the credential image to obtain a processed credential image.

Alternatively, when photographing the credential, there is a rectangular region in a photographing interface for guiding the photographing. A user can photograph the credential by aligning the rectangular region to the credential so as to obtain the credential image.

Firstly, the credential image is filtered horizontally by a Sobel filter, that is, the credential image is filtered with a Sobel operator in a horizontal direction. Then, the filtered credential image is binarized. The binarization refers to comparing the gray values of the pixel points in the credential image with a predefined gray threshold and dividing the pixel points in the credential image into two groups: a group of pixel points whose gray values are greater than the predefined gray threshold and a group of pixel points whose gray values are less than the predefined gray threshold. The two groups of pixel points are presented with two different colors of black and white in the credential image, thus obtaining the binarized credential image, as shown in Fig. 2B. The pixel points located in the color of foreground are referred as the pixel points of foreground color, i.e., the white pixel points of Fig. 2B, and the pixel points located in the color of background are referred as the pixel points of background color, i.e., the black pixel points of Fig. 2B.

In step 204, a line detection is conducted for a predefined area in the processed credential image to obtain a target line, wherein the target line is identified as the predefined edge of the credential image.

The predefined area is an area located in the credential image where predefined edges of the credential may exist. For example, the predefined area is the area of the lower edge of the credential in the credential image, or the predefined area is the area of the upper edge of the credential in the credential image and so on.

Upon obtaining the processed credential image, the line detection is conducted for the processed credential image. Alternatively, the line detection may be realized in form of straight line fitting or Hough transformation, so as to obtain a target line, and the target line is identified as the predefined edge of the credential image.

For example, with respect to a credential image that has been filtered horizontally by Sobel filtering and binarized, a line detection is conducted for the area of the lower edge of the credential in the credential image. After conducting straight line fitting and/or Hough transformation, there is a line below the credential image, and this line is identified as the predefined edge of the credential image. The location of the lower edge of the credential in the credential image is shown in Fig. 2C by way of example.

In step 206, at least one information area in the credential image is identified based on the predefined edge.

In a case where the type of a credential image is known, there are fixed relative location relationships between predefined edges of the credential image and other information areas on the credential; thus at least one information area in the credential image may be identified based on the predefined edge and a relative location relationship.

The relative location relationship refers to relative location relationship between predefined edges of the credential image and information areas on the credential.

Alternatively, the credential is a second generation ID card, the predefined edge is the lower edge of the second generation ID card, and the information area is a citizenship number area of the second generation ID card; then the step 206 may be implemented as follows: identifying the area that is a certain distance above the lower edge as the citizenship number area. The second-generation ID card may be, in one example, a Chinese Resident Identify Card. Such a card may comprise a non-contact IC chip, a directional holographic image, an anti-counterfeiting film, a logo revealed by ultraviolet light, and so on.

Taking a second generation ID card for example, the citizenship number area is located above the predefined edge of the credential; as another example, the address information area is located to the upper left of the predefined edge of the credential. At least one information area in the credential image is identified based on the predefined edge.

In step 208, the information area is cut to obtain at least one character area.

An information area includes a plurality of characters. For one information area, at least one character area may be obtained by area cutting. A character area is a area including a single character. A character may be Chinese characters, English letters, numbers and/or characters in other languages.

In summary, in the method for area identification according to the embodiment of the disclosure, Sobel horizontal filtering and binarization are performed on the credential image to obtain a processed credential image; a line detection is conducted for a predefined area in the processed credential image to obtain a target line, wherein the target line is identified as the predefined edge of the credential image; at least one information area in the credential image is identified based on the predefined edge; and the information area is cut to obtain at least one character area. It solves the problems in the related art that it is difficult to identify some information areas in the credential image obtained directly by photographing and that the locations of some information areas are inaccurate, and achieves the effect of locating an information areas accurately and identifying character areas in the information areas accurately by determining information areas in an credential image based on the predefined edge and cutting the information areas.

In an alternative embodiment provided based on the embodiment of Fig. 2A, in order to find out the predefined edges of a credential faster, a terminal may zoom out from the credential image according to the size of the credential image in advance. That is, prior to the step 202, the method further comprises a step 201. In order to obtain a more accurate line when conducting a line detection on the processed credential image, the terminal may conduct an area-connection process to predefined areas in the processed credential image. That is, after the step 202, the method further comprises a step 203, as shown in Fig. 3A.

In step 201, the credential image is zoomed out with a predefined zoom-out scale in advance.

The terminal may zoom out from the credential image with a predefined zoom-out scale according to the size of the credential image in advance; so as to obtain a zoomed out credential image. Zooming-out processing of the credential image can result in the predefined edges of the credential image being found faster.

In step 203, an area-connection process is conducted to predefined areas in the processed credential image.

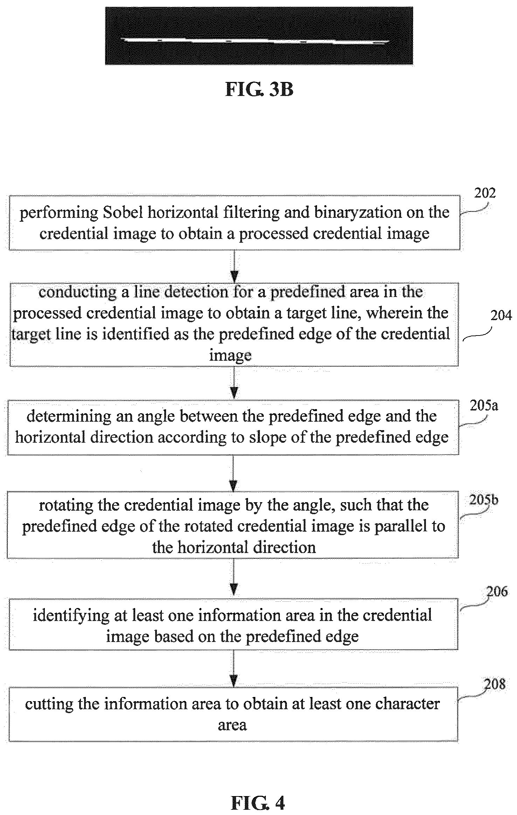

Upon obtaining a credential image that has been filtered horizontally by Sobel filtering and binarized, an area-connection process is conducted to the processed credential image, to remove larger areas and smaller areas of foreground pixel dots in the binarized credential image; so that the predefined edge of the credential image may be identified more accurately. The credential image after the area-connection process is as shown in Fig. 3B.

In summary, in the method for area identification according to the embodiment of the disclosure, the credential image may be zoomed out with a predefined zoom-out scale in advance, such that the predefined edges of the credential image may be found faster.

By an area-connection process applied to predefined areas in the processed credential image, the accuracy of determining the predefined edges of the credential image may be improved, and therefore the accuracy of subsequent information area identification may be improved.

In an alternative embodiment provided based on the embodiment of Fig. 2A, the credential has a rotation of a few or several degrees in the credential image. That is, the credential is not in a horizontal position in the credential image; instead, there is an angle between the horizontal direction and the credential. The terminal conducts tilt angle correction to the credential image according to the slope of the predefined edge. That is, after step 204, the method further comprises step 205a and step 205b, as shown in Fig. 4.

In step 205a, an angle between the predefined edge and the horizontal direction is determined according to the slope of the predefined edge.

The terminal calculates an angle between the horizontal direction and the predefined edge of the credential. Such an angle is the angle between the predefined edge and the horizontal direction.

In step 205b, the credential image is rotated by the angle, such that the predefined edge of the rotated credential image is parallel to the horizontal direction.

In summary, in the method for area identification according to the embodiment of the disclosure, the credential of the credential image is made to be parallel to the horizontal direction by conducing rotation correction to the predefined edge of the credential image. Therefore accuracy of subsequent information area identification may be improved.

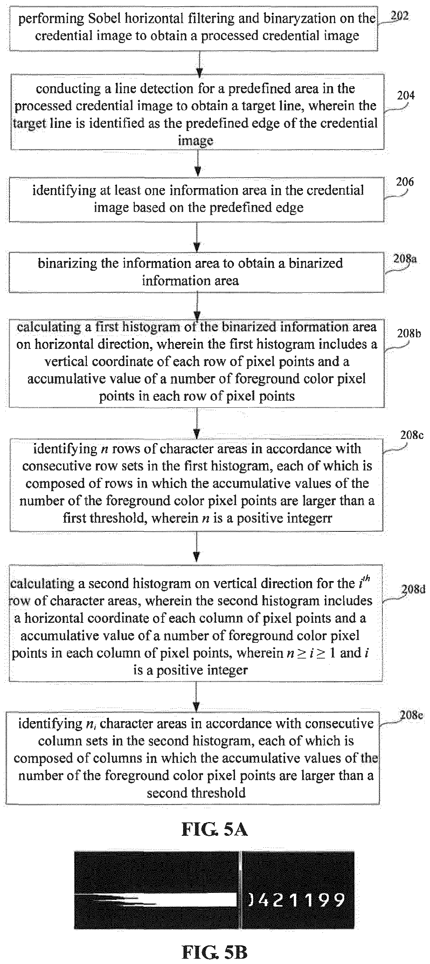

In an alternative embodiment provided based on the embodiment of Fig. 2A, a cutting process is conducted to the information area in the step 208. Such a process may be implemented as the following steps 208a to 208e, as shown in Fig. 5A.

In step 208a, the information area is binarized to obtain the binarized information area.

Taking the information area being the civil identity number area as an example, the information area may be pre-processed. The pre-processing may include operations such as de-noising, filtering, extracting edges and so on. The pre-processed information area may be binarized.

In step 208b, a first histogram of the binarized information area is calculated on a horizontal direction, wherein the first histogram includes a vertical coordinate of each row of pixel points and an accumulative value of a number of foreground color pixel points in each row of pixel points.

The first histogram of the binarized information area is calculated on a horizontal direction, wherein the first histogram represents the vertical coordinate of the pixel points of each row on the vertical direction and the number of the pixel points of the foreground color in the pixel points of each row on the horizontal direction, as shown in Fig. 5B.

In step 208c, *n* rows of character areas are identified in accordance with consecutive row sets in the first histogram, each of which is composed of rows in which the accumulative values of the number of the foreground color pixel points are larger than a first threshold, wherein *n* is a positive integer.

The number of the pixel points of the foreground color in the pixel points of each row can be obtained based on the first histogram. By comparing the number of the pixel points of the foreground color in the pixel points of each row with the first threshold, the set of consecutive rows composed of the rows of which the numbers of the pixel points of the foreground color in the first histogram are greater than the first threshold is determined to be the row in which the character area is located.

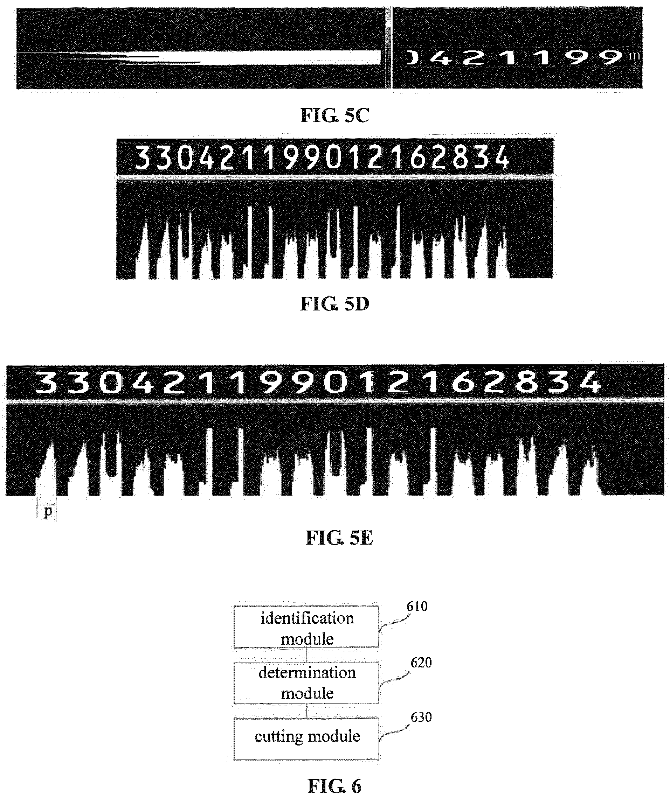

The set of consecutive rows refers to the set of *m* consecutive rows of pixel points of which the numbers of the pixel points of the foreground color are greater than the first threshold, as shown in Fig. 5C. For the m consecutive rows of pixel points in Fig. 5C, the numbers of the pixel points of the foreground color in the left histogram are greater than the first threshold. The m consecutive rows of pixel points correspond to the row of civil identity number "0421299" in the credential image.

When the information area is the address information area or other information areas, the character area may contain two or more rows. Meanwhile, each set of consecutive rows is identified to be a row of character areas and *n* sets of consecutive rows are identified to be *n* rows of character areas.

In step 208d, a second histogram is calculated on a vertical direction for the *i*^{th} row of character areas, wherein the second histogram includes a horizontal coordinate of each column of pixel points and a accumulative value of a number of foreground color pixel points in each column of pixel points, *wherein n* ≥ *i* ≥ 1 and *i* is a positive integer.

For the identified row of the civil identity number, the second histogram is calculated on a vertical direction, wherein the second histogram represents the horizontal coordinate of the pixel points of each column on a horizontal direction, and the number of the pixel points of the foreground color in the pixel points of each column on a vertical direction; and a foreground pixel refers to white pixels in the binarized image, as shown in Fig. 5D.

In step 208e, *nᵢ* character areas are identified in accordance with consecutive column sets in the second histogram, each of which is composed of columns in which the accumulative values of the number of the foreground color pixel points are larger than a second threshold.

The number of the pixel points of the foreground color in the pixel points of each column can be obtained based on the second histogram. By comparing the number of the pixel points of the foreground color in the pixel points of each column with the second threshold, the set of consecutive columns composed of the columns of which the numbers of the pixel points of the foreground color in the second histogram are greater than the second threshold can be determined to be the column in which the character area is located.

The set of consecutive columns refers to the set of *p* consecutive columns of pixel points of which the numbers of the pixel points of the foreground color are greater than the second threshold. As shown in Fig. 5E, the set of consecutive columns is represented by "p", i.e., the consecutive white area formed in the second histogram. For the p consecutive columns of pixel points in Fig. 5E, the numbers of the pixel points of the foreground color in the lower histogram are greater than the second threshold. The p consecutive columns of pixel points correspond to the character area "3" in the credential image.

Each set of consecutive columns is identified to be one character area and *n* sets of consecutive columns are identified to be *n* character areas. In Fig. 5E, 18 character areas can be identified.

When there are *n* rows of character areas, the steps 208d and 208e are performed once for each row of character areas, thus being performed a total of *n* times.

For each identified character area, the characters contained in the character area can be identified through character identification technology. The characters may be Chinese characters, English letters, numbers and/or single characters of other languages.

In summary, in the method for area identification according to the embodiment of the disclosure, by binarizing the information area; calculating a first histogram of the binarized information area on a horizontal direction; determining *n* rows of character areas in the information area; calculating a second histogram of the *n* rows of character areas on a vertical direction; and identifying the character area to which each character corresponds, the accuracy of identifying the character areas in the information area can be improved.

Described below are apparatus embodiments of the disclosure which may be used to perform the method embodiments of the disclosure. For the details not cited in the apparatus embodiments, please see the method embodiments of the disclosure.

Fig. 6 is a block diagram illustrating an apparatus for area identification according to an exemplary embodiment. As shown in Fig. 6, the apparatus includes but is not limited to the following.

An identification module 610 configured to identify a predefined edge in a credential image, wherein the predefined edge is an edge located along a predefined direction of the credential.

The credential image is the image obtained directly by photographing the credential, such as an image of an identity card, an image of a social security card and the like.

A determination module 620 configured to determine at least one information area in the credential image based on the predefined edge.

The location of the predefined edge in the credential image is relatively fixed. Further, the location of the predefined edge is usually easier to locate than the location of an information area; therefore, the respective information areas on the credential can be determined in the credential image by the determination module 620 based on the predefined edge.

The information area refers to the area carrying character information in the credential image, such as at least one of a name information area, date of birth information area, gender information area, address information area, civil identity number information area, serial number information area, issuance office of the credential information area, valid date information area and the like.

A cutting module 630 is configured to cut the information area to obtain at least one character area.

An information area includes a plurality of characters. For one information area, at least one character area may be obtained by the cutting module 630 through area cutting. A character area is a area including a single character. A character may be Chinese characters, English letters, numbers and/or characters in other languages.

In summary, in the apparatus for area identification according to the embodiment of the disclosure, by identifying a predefined edge in a credential image, at least one information area in the credential image is identified based on the predefined edge; the information area is cut to obtain at least one character area. It solves the problems in the related art that it is difficult to identify some information areas in the credential image obtained directly by photographing and that the locations of some information areas are inaccurate, and achieves the effect of locating an information areas accurately and identifying character areas in the information areas accurately by determining information areas in an credential image based on the predefined edge and cutting the information areas.

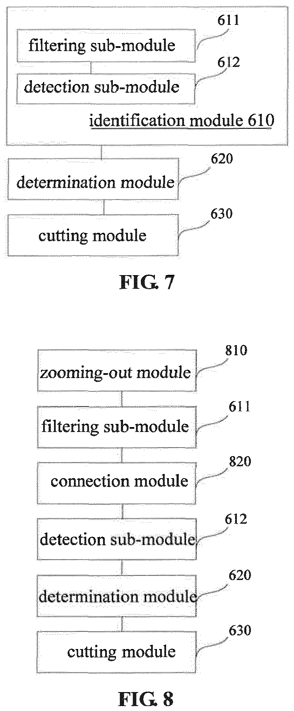

In an alternative embodiment based on the embodiment as shown in Fig. 6, the identification module 610 may include the following sub-modules, as shown in Fig. 7.

A filtering sub-module 611 is configured to perform Sobel horizontal filtering and binarization on the credential image to obtain a processed credential image. Firstly, the filtering sub-module 611 filters the credential image horizontally by Sobel filtering, that is, the credential image is filtered with a Sobel operator in a horizontal direction. Then, the filtered credential image is binarizd.

The binarization refers to comparing the gray values of the pixel points in the credential image with a predefined gray threshold and dividing the pixel points in the credential image into two groups: a group of pixel points whose gray values are greater than the predefined gray threshold and a group of pixel points whose gray values are less than the predefined gray threshold. The two groups of pixel points are presented with two different colors of black and white in the credential image, thus obtaining the binarized credential image.

A detection sub-module 612 is configured to conduct a line detection for a predefined area in the processed credential image to obtain a target line, wherein the target line is identified as the predefined edge of the credential image.

The predefined area is an area located in the credential image where predefined edges of the credential may exist. For example, the predefined area is the area of the lower edge of the credential in the credential image, or the predefined area is the area of the upper edge of the credential in the credential image and so on.

Upon obtaining the credential image processed by the filtering sub-module 611, the line detection is conducted for the processed credential image by the detection sub-module 612. Alternatively, the line detection may be realized in form of straight line fitting or Hough transformation, so as to obtain a target line, and the target line is identified as the predefined edge of the credential image.

In summary, in the apparatus for area identification according to the embodiment of the disclosure, the credential image is filtered horizontally by Sobel filtering and binarized to obtain the processed credential image; a line detection is conducted for a predefined area in the processed credential image to obtain an target line; the target line is identified as the predefined edge of the credential image; at least one information area in the credential image is identified based on the predefined edge; and the information area is cut to obtain at least one character area. It solves the problems in related art that it is difficult to identify some information areas in the credential image obtained directly by photographing and that the locations of some information areas are inaccurate, and achieves the effect of locating an information areas accurately and identifying character areas in the information areas accurately by determining information areas in an credential image based on the predefined edge and cutting the information areas.

In an alternative embodiment based on the embodiment as shown in Fig. 7, the apparatus may include the following sub-modules, as shown in Fig. 8.

A zooming-out module 810 is configured to zoom out from the credential image with a predefined zoom-out scale in advance.

The zooming-out module 810 zooms out from the credential image with a predefined zoom-out scale according to the size of the credential image in advance; so as to obtain a zoomed out credential image. Zooming-out processing of the credential image can result in the predefined edges of the credential image being found faster.

A connection module 820 is configured to conduct an area-connection process to predefined areas in the processed credential image.

Upon obtaining a credential image progressed by the filtering sub-module 611, an area-connection process is conducted to the processed credential image by the connection module 820, to remove larger areas and smaller areas of foreground pixel dots in the binarized credential image; so that the predefined edge of the credential image may be identified more accurately.

The determination module 620 is further configured to identify at least one information area in the credential image based on the predefined edge. A relative location relationship refers to relative location relationship between predefined edges of the credential image and other information areas on the credential.

Alternatively, the credential is a second generation ID card, the predefined edge is the lower edge of the second generation ID card, and the information area is a citizenship number area of the second generation ID card. The determination module 620 is further configured to identify the area that is certain distance above the lower edge as the citizenship number area.

In summary, in the apparatus for area identification according to the embodiment of the disclosure, the credential image may be zoomed out with a predefined zoom-out scale in advance, such that the predefined edges of the credential image may be found faster.

By an area-connection process applied to predefined areas in the processed credential image, the accuracy of determining the predefined edges of the credential image may be improved, and therefore the accuracy of subsequent information area identification may be improved.

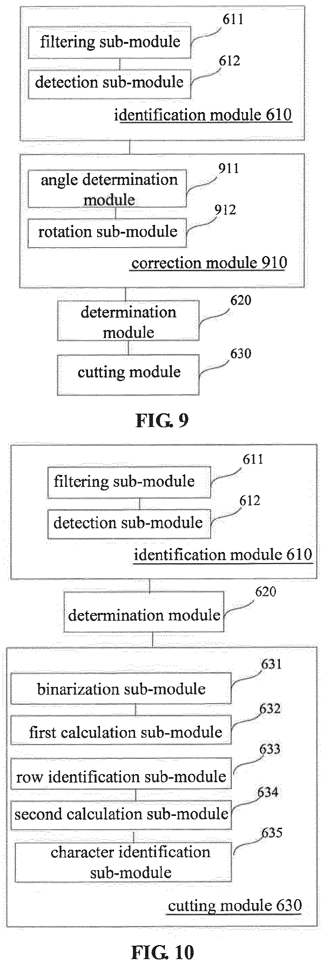

In an alternative embodiment based on the embodiment as shown in Fig. 7, the determination module 820 may include the following sub-modules, as shown in Fig. 9.

A correction module 910 is configured to conduct a tilt angle correction to the credential image according to the slope of the predefined edge.

The correction module 910 may comprise the following sub-modules.

An angle determination module 911 is configured to determine an angle between the predefined edge and the horizontal direction according to the slope of the predefined edge. The terminal calculates an angle between the horizontal direction and the predefined edge of the credential. Such an angle is the angle between the predefined edge and the horizontal direction.

A rotation sub-module 912 is configured to rotate the credential image by the angle, such that the predefined edge of the rotated credential image is parallel to the horizontal direction.

The terminal rotates the credential image with the angle calculated by the angle determination module 911 through the rotation sub-module 912.

In summary, in the apparatus for area identification according to the embodiment of the disclosure, the credential of the credential image is made to be parallel to the horizontal direction by conducing rotation correction to the predefined edge of the credential image. Therefore accuracy of subsequent information area identification may be improved.

In an alternative embodiment based on the embodiment as shown in Fig. 8, the cutting module 630 may include the following sub-modules, as shown in Fig. 10.

A binarization sub-module 631 configured to binarize the information area to obtain a binarized information area.

Taking the information area being the civil identity number area as an example, the binarization sub-module 631 may pre-process the information area. The pre-processing may include operations such as de-noising, filtering, extracting edges and so on. The pre-processed information area may be binarized.

A first calculation sub-module 632 configured to calculate a first histogram of the binarized information area on a horizontal direction, wherein the first histogram includes a vertical coordinate of each row of pixel points and an accumulative value of a number of foreground color pixel points in each row of pixel points.

The first calculation sub-module 632 calculates the first histogram of the information area processed by the binarization sub-module 631 on a horizontal direction, wherein the first histogram represents the vertical coordinate of the pixel points of each row on the vertical direction and the number of the pixel points of the foreground color in the pixel points of each row on the horizontal direction.

A row identification sub-module 633 configured to identify *n* rows of character areas in accordance with consecutive row sets in the first histogram, each of which is composed of rows in which the accumulative values of the number of the foreground color pixel points are larger than a first threshold, wherein *n* is a positive integer. The number of the pixel points of the foreground color in the pixel points of each row can be obtained based on the first histogram. Through comparing, by row identification sub-module 633 the number of the pixel points of the foreground color in the pixel points of each row with the first threshold, the set of consecutive rows composed of the rows of which the numbers of the pixel points of the foreground color in the first histogram are greater than the first threshold is determined to be the row in which the character area is located.

The set of consecutive rows refers to the set of *m* consecutive rows of pixel points of which the numbers of the pixel points of the foreground color are greater than the first threshold.

Each set of consecutive rows is identified to be a row of character areas and *n* sets of consecutive rows are identified to be *n* rows of character areas.

A second calculation sub-module 634 is configured as follows: for the *i^{th}* row of character areas, calculate a second histogram on a vertical direction, wherein the second histogram includes a horizontal coordinate of each column of pixel points and a accumulative value of a number of foreground color pixel points in each column of pixel points, wherein *n* ≥ *i* ≥ 1 and *i* is a positive integer.

For the row of the civil identity number identified by the identification sub-module 633, the second calculation sub-module 643 calculates the second histogram on a vertical direction, wherein the second histogram represents the horizontal coordinate of the pixel points of each column on a horizontal direction, and the number of the pixel points of the foreground color in the pixel points of each column on a vertical direction; a foreground pixel refers to white pixels in the binarized image.

A character identification sub-module 635 configured to identify *nᵢ* character areas in accordance with consecutive column sets in the second histogram, each of which is composed of columns in which the accumulative values of the number of the foreground color pixel points are larger than a second threshold.

The number of the pixel points of the foreground color in the pixel points of each column can be obtained based on the second histogram. Through comparing, by the character identification sub-module 633, the number of the pixel points of the foreground color in the pixel points of each column with the second threshold, the set of consecutive columns composed of the columns of which the numbers of the pixel points of the foreground color in the second histogram are greater than the second threshold can be determined to be the column in which the character area is located.

The set of consecutive columns refers to the set of *p* consecutive columns of pixel points of which the numbers of the pixel points of the foreground color are greater than the second threshold.

Each set of consecutive columns is identified to be one character area and *n* sets of consecutive columns are identified to be *n* character areas.

In summary, in the apparatus for area identification according to the embodiment of the disclosure, by binarizing the information area; calculating a first histogram of the binarized information area on a horizontal direction; determining *n* rows of character areas in the information area; calculating a second histogram of the *n* rows of character areas on a vertical direction; and identifying the character area to which each character corresponds, the accuracy of identifying the character areas in the information area can be improved.

An apparatus for area identification is provided by an embodiment of the disclosure to implement the above methods for area identification provided in the disclosure. The apparatus comprises: a processor and a memory for storing processor-executable instructions. The processor is configured for: identifying a predefined edge in a credential image, wherein the predefined edge is an edge located on a predefined directions of the credential; identifying at least one information area in the credential image based on the predefined edge; and cutting the information area to obtain at least one character area.

With respect to the apparatus in the above embodiments, the specific manners that the respective modules perform operations have been described in detail in the embodiments regarding the relevant methods, and it is unnecessary to go into detail here.

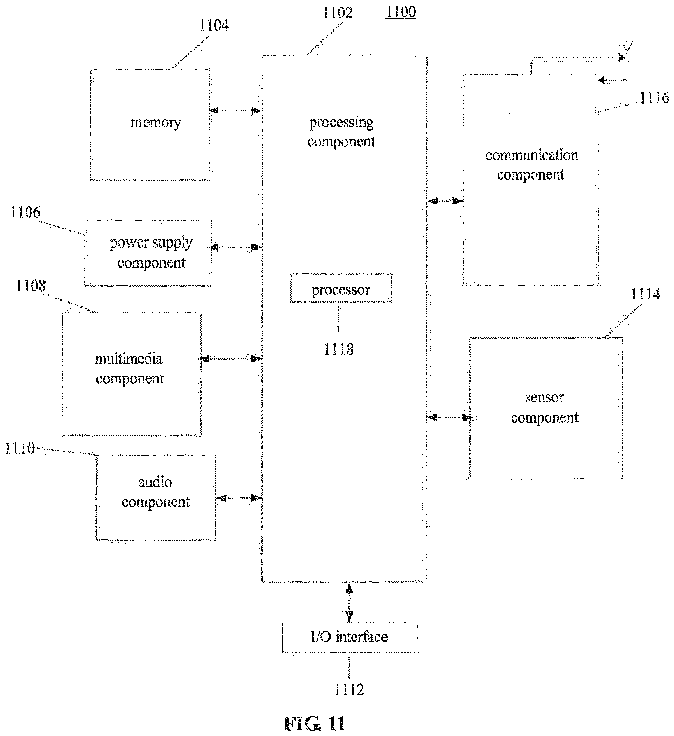

Fig. 11 is a structure block diagram illustrating a device according to an exemplary embodiment.

For example, an apparatus 1100 may be a mobile phone, a computer, a digital broadcast terminal, a messaging device, a gaming console, a tablet, a medical device, exercise equipment, a personal digital assistant, and the like.

Referring to Fig. 11, the apparatus 1100 may comprise one or more of the following components: a processing component 1102, a memory 1104, a power supply component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 may comprise one or more processors 1118 to execute instructions to perform all or part of the steps in the above described methods. Moreover, the processing component 1102 may comprise one or more modules which facilitate the interaction between the processing component 1102 and other components. For instance, the processing component 1102 may comprise a multimedia module to facilitate the interaction between the multimedia component 1108 and the processing component 1102.

The memory 1104 is configured to store various types of data to support the operation of the apparatus 1100. Examples of such data comprise instructions for any applications or methods operated on the apparatus 1100, contact data, phonebook data, messages, images, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1106 provides power to various components of the apparatus 1100. The power component 1106 may comprise a power management system, one or more power sources, and any other components associated with the generation, management, and distribution of power for the apparatus 1100.

The multimedia component 1108 comprises a screen providing an output interface between the apparatus 1100 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 comprises a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or capable of optical focusing and zooming.

The audio component 1110 is configured to output and/or input audio signals. For example, the audio component 1110 comprises a microphone (MIC) configured to receive an external audio signal when the apparatus 1100 is in an operation mode, such as a call mode, a recording mode, and a voice identification mode. The received audio signal may be further stored in the memory 1104 or transmitted via the communication component 1116. In some embodiments, the audio component 1110 further comprises a speaker to output audio signals.

The I/O interface 1112 provides an interface between the processing component 1102 and peripheral interface modules, the peripheral interface modules being, for example, a keyboard, a click wheel, buttons, and the like. The buttons may comprise, but are not limited to: a home button, a volume button, a starting button, and a locking button.

The sensor component 1114 comprises one or more sensors to provide status assessments of various aspects of the apparatus 1100. For instance, the sensor component 1114 may detect an open/closed status of the apparatus 1100, relative positioning of components (e.g., the display and the keypad of the apparatus 1100), a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may comprise a proximity sensor configured to detect the presence of a nearby object without any physical contact. The sensor component 1114 may also comprise a light sensor, such as a CMOS or CCD image sensor, for use in imaging applications. In some embodiments, the sensor component 1114 may also comprise an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 can access a wireless network based on a communication standard, such as WiFi, 2G, or 3G, or a combination thereof. In an exemplary embodiment, the communication component 1116 receives a broadcast signal or broadcast associated information from an external broadcast management system via a broadcast channel. In an exemplary embodiment, the communication component 1116 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as comprised in the memory 1104, executable by the processor 1118 in the apparatus 1100, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being defined by the following claims.

It will be appreciated that the inventive concept is not limited to the exact construction that has been described above and illustrated in the accompanying drawings, and that various modifications and changes can be made without departing from the scope thereof. It is intended that the scope of the disclosure to be limited by the appended claims only.

## Claims

1. A computer implemented method for area identification, comprising:
identifying (102) a predefined edge in a credential image, wherein the predefined edge is an edge located along a predefined direction of the credential image;
identifying (104) at least one information area in the credential image based on the predefined edge; and
cutting (106) the information area to obtain at least one character area.

2. The method of claim 1, wherein identifying a predefined edge in a credential image comprises:
performing (202) Sobel horizontal filtering and binarization on the credential image to obtain a processed credential image; and
conducting (204) line detection for a predefined area in the processed credential image to obtain a target line, wherein the target line is identified as the predefined edge of the credential image.

3. The method of claim 2, further comprising:
zooming out (201) from the credential image with a predefined zoom-out scale in advance.

4. The method of claim 2 or 3, further comprising:
conducting (203) an area-connection process to predefined areas in the processed credential image.

5. The method of any one of claims 1 to 4, wherein identifying at least one information area in the credential image based on the predefined edge comprises:
determining the at least one information area based on the predefined edge and a relative location relationship between the predefined edge and the information area.

6. The method of claim 5, wherein the credential is a second generation ID card, the predefined edge is the lower edge of the second generation ID card, and the information area is a citizenship number area within the second generation ID card, and
wherein determining the at least one information area based on the predefined edge and a relative location relationship comprises: determining an area that is located a predefined height above the lower edge as the citizenship number area.

7. The method of any one of claims 1 to 4, further comprising:
conducting a tilt angle correction to the credential image according to the slope of the predefined edge.

8. The method of claim 7, wherein conducting the tilt angle correction comprises:
determining (205a) an angle between the predefined edge and the horizontal direction according to the slope of the predefined edge; and
rotating (205b) the credential image by the angle, such that the predefined edge of the rotated credential image is substantially parallel to the horizontal direction.

9. The method of any one of claims 1 to 4, wherein cutting the information area to obtain at least one character area comprises:
binarizing (208a) the information area to obtain a binarized information area;
calculating (208b) a first histogram of the binarized information area along a horizontal direction, wherein the first histogram includes a vertical coordinate of each row of pixel points and an accumulative value of a number of foreground color pixel points in each row of pixel points;
identifying (208c) *n* rows of character areas in accordance with consecutive row sets in the first histogram, each of which is composed of rows in which the accumulative values of the number of the foreground color pixel points is larger than a first threshold, wherein *n* is a positive integer;
calculating (208d) a second histogram along a vertical direction for the *i*^{th} row of character areas, wherein the second histogram includes a horizontal coordinate of each column of pixel points and an accumulative value of a number of foreground color pixel points in each column of pixel points, wherein *n* ≥ *i* ≥ 1 and *i* is a positive integer;
identifying (208e) *nᵢ* character areas in accordance with consecutive column sets in the second histogram, each of which is composed of columns in which the accumulative values of the number of the foreground color pixel points are larger than a second threshold.

10. An apparatus for area identification comprising:
an identification module (610) configured to identify a predefined edge in a credential image, wherein the predefined edge is an edge located along a predefined direction of the credential image;
a determination module (620) configured to determine at least one information area in the credential image based on the predefined edge; and
a cutting module (630) configured to cut the information area to obtain at least one character area.

11. The apparatus of claim 10, wherein the identification module (610) comprises:
a filtering sub-module (611) configured to perform Sobel horizontal filtering and binarization on the credential image to obtain a processed credential image; and
a detection sub-module (612) configured to conduct line detection for a predefined area in the processed credential image to obtain a target line, wherein the target line is identified as the predefined edge of the credential image.

12. The apparatus of claim 11, wherein the credential is a second generation ID card, the predefined edge is the lower edge of the second generation ID card, and the information area is a citizenship number area within the second generation ID card, and
wherein the determination module is further configured to determine an area that is located a predefined height above the lower edge as the citizenship number area.

13. The apparatus of claim 10, further comprising: a correction module (910) configured to conduct a tilt angle correction to the credential image according to the slope of the predefined edge.

14. The apparatus of claim 10, wherein the cutting module (630) comprises:
a binarization sub-module (631) configured to binarize the information area to obtain a binarized information area;
a first calculation sub-module (632) configured to calculate a first histogram of the binarized information area along a horizontal direction, wherein the first histogram includes a vertical coordinate of each row of pixel points and an accumulative value of a number of foreground color pixel points in each row of pixel points;
a row identification sub-module (633) configured to identify *n* rows of character areas in accordance with consecutive row sets in the first histogram, each of which is composed of rows in which the accumulative values of the number of the foreground color pixel points is larger than a first threshold, wherein *n* is a positive integer;
a second calculation sub-module (634) configured to: for the *i^{th}* row of character areas, calculate a second histogram along a vertical direction, wherein the second histogram includes a horizontal coordinate of each column of pixel points and an accumulative value of a number of foreground color pixel points in each column of pixel points, wherein *n* ≥ *i* ≥ 1 and i is a positive integer; and
a character identification sub-module (635) configured to identify *nᵢ* character areas in accordance with consecutive column sets in the second histogram, each of which is composed of columns in which the accumulative values of the number of the foreground color pixel points are larger than a second threshold.

15. A non-transitory computer-readable storage medium having instructions stored thereon which when executed by a processor cause the processor to perform the method of any one of claims 1 to 9.
